(19) Europäisches Patentamt / European Patent Office / Office européen des brevets

(11) **EP 2 490 220 A1**

(12) **EUROPEAN PATENT APPLICATION**
published in accordance with Art. 153(4) EPC

(43) Date of publication:
**22.08.2012   Bulletin 2012/34**

(51) Int Cl.:
*G11B 7/24* (2006.01)        *G11B 7/007* (2006.01)
*G11B 7/244* (2006.01)       *G11B 7/26* (2006.01)

(21) Application number: **10823172.1**

(22) Date of filing: **04.10.2010**

(86) International application number:
**PCT/JP2010/005939**

(87) International publication number:
**WO 2011/045903 (21.04.2011 Gazette 2011/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.10.2009   JP 2009236888**

(71) Applicant: **Sony Corporation
Tokyo 108-0075 (JP)**

(72) Inventors:
• **SAKAMOTO, Tetsuhiro
Tokyo 108-0075 (JP)**

• **MIYAMOTO, Hirotaka
Tokyo 108-0075 (JP)**
• **TAKEMOTO, Yoshihiro
Tokyo 108-0075 (JP)**
• **YAMATSU, Hisayuki
Tokyo 108-0075 (JP)**

(74) Representative: **Haines, Miles John L.S.
D Young & Co LLP
120 Holborn
London EC1N 2DY (GB)**

(54) **OPTICAL RECORDING MEDIUM AND METHOD FOR MANUFACTURING OPTICAL RECORDING MEDIUM**

(57)    [Object] To enable stable void recording to be performed with lower power than in a case where a conventional void (hole) recording method is adopted.

[Solving Means] Provided is an optical recording medium including a recording layer in which a plurality of boundary surfaces of resin layers are formed, and intervals of the boundary surfaces are set to be equal to or smaller than a focal depth of recording light. A recording sensitivity of hole marks is enhanced at the boundary surfaces of the resin layers. Therefore, by providing the recording layer in which the boundary surfaces are pro- vided at intervals equal to or smaller than the focal depth of recording light as described above, that is, the recording layer is practically filled with the boundary surfaces, the hole mark recording sensitivity of the recording layer can be enhanced as a whole. Accordingly, it becomes possible to suppress laser power requisite for recording to be smaller than that of the conventional art and solve the problems of the conventional void recording method. As a result, realizability of a large-capacity recording medium as a bulk-type recording medium can be additionally enhanced.

Optical recording medium as embodiment

FIG.5

**Description**

Technical Field

The present invention relates to an optical recording medium onto/from which signals are recorded/reproduced by light irradiation, and a production method therefor.

Background Art

As optical recording media onto/from which signals are recorded/reproduced by light irradiation, so-called optical discs such as a CD (Compact Disc), a DVD (Digital Versatile Disc), and a BD (Blu-ray Disc: registered trademark) are in wide use.

Regarding next-generation optical recording media following the optical recording media such as a CD, a DVD, and a BD that have currently prevailed, the applicant has proposed a so-called bulk-recording-type optical recording medium as disclosed in Patent Documents 1 and 2 below.

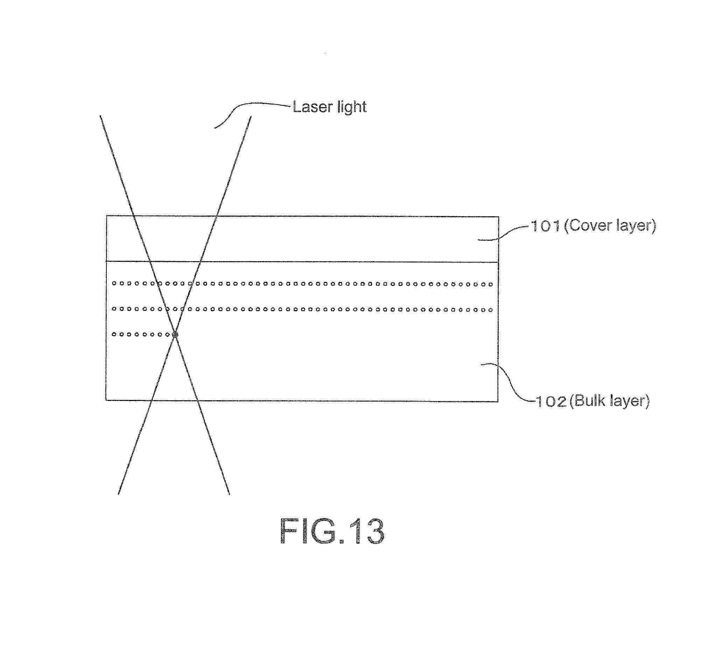

Here, bulk recording is a technique for realizing a large recording capacity by performing, onto an optical recording medium including at least a cover layer 101 and a bulk layer (recording layer) 102 as shown in Fig. 13, for example, multilayer recording within the bulk layer 102 by irradiating laser light while successively changing a focal position.

Regarding the bulk recording as described above, Patent Document 1 discloses a recording technique called micro-hologram technique.

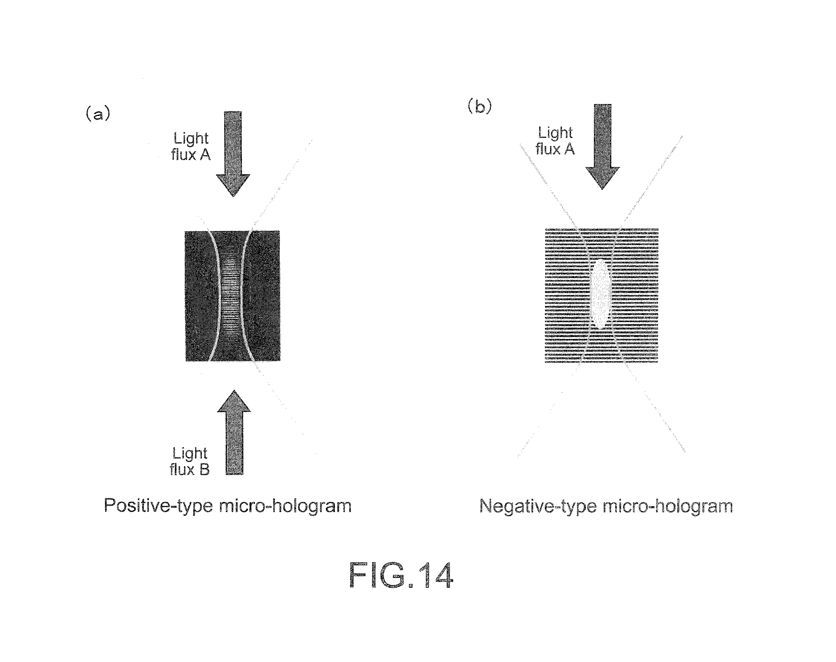

The micro-hologram technique is roughly classified into a positive-type micro-hologram technique and a negative-type micro-hologram technique as shown in Figs. 14.

In the micro-hologram technique, a so-called hologram recording material is used as a recording material of the bulk layer 102. As the hologram recording material, a photopolymerization-type photopolymer is widely known, for example.

The positive-type micro-hologram technique is a technique for forming recording marks by collecting light of two opposing light fluxes (light flux A, light flux B) at one position and forming minute interference fringes (holograms) as shown in Fig. 14(a).

Further, the negative-type micro-hologram technique shown in Fig. 14 (b) is a technique for forming recording marks by deleting, based on an opposite idea from the positive-type micro-hologram technique, interference fringes that have been formed previously by irradiating laser light and using the deleted portions as the recording marks.

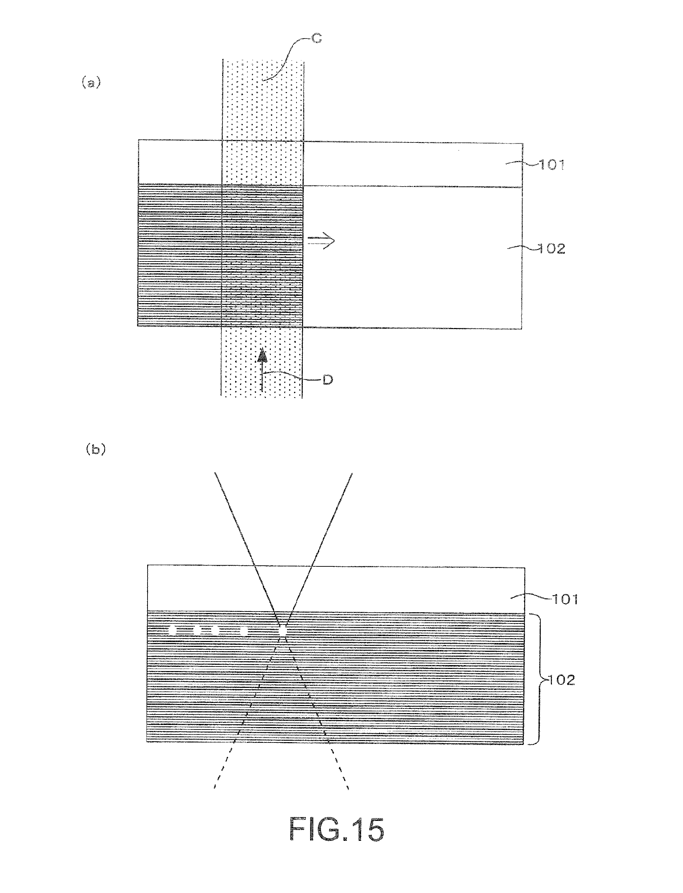

Figs. 15 are diagrams for explaining the negative-type micro-hologram technique.

In the negative-type micro-hologram technique, initialization processing for forming interference fringes on the bulk layer 102 in advance as shown in Fig. 15(a) is carried out before performing a recording operation. Specifically, as shown in the figure, light fluxes C and D as parallel light are irradiated oppositely so that interference fringes are formed on the entire bulk layer 102.

After forming the interference fringes in advance by the initialization processing as described above, information recording is performed by forming deletion marks as shown in Fig. 15(b). Specifically, by irradiating laser light in accordance with recording information while a focal position is set at an arbitrary layer position, information recording that uses deletion marks is performed.

However, there have been the following problems in the positive- and negative-type micro-hologram techniques. First, for realizing the positive-type micro-holograms, there is a problem that extremely-high accuracy is required in control of a laser light irradiation position. In other words, although recording marks (holograms) are formed by collecting the opposing light fluxes A and B at one position in the positive-type micro-hologram technique as shown in Fig. 14(a), extremely-high accuracy is required in controlling both light irradiation positions.

Since extremely-high position control accuracy is required as described above, a technical difficulty for realizing the positive-type micro-hologram technique is high, and even if the technique is realized, apparatus production costs increase. Consequently, the positive-type micro-hologram technique is not a realistic technique.

Further, there is a problem that prerecording initialization processing is required in the negative-type micro-hologram technique.

Moreover, in a case where the initialization processing is carried out using parallel light as shown in Figs. 15 in particular, there are problems that extremely-high power is required as initialization light and it becomes difficult to form minute recording marks (deletion marks).

Specifically, based on the principle of positive-type micro-holograms described with reference to Fig. 14(a), two light fluxes should originally be collected at the same position in the initialization processing, but when carrying out the initialization processing by collecting two light fluxes as described above, the initialization processing needs to be carried out a number of times corresponding to the set number of layers, which is not realistic. In this regard, the processing time is shortened by using parallel light as described above, but for forming interference fringes using parallel light as described above, extremely-large power is required as compared to the case where the technique of collecting light is adopted as described above. It is also possible to enhance recording sensitivity of the bulk layer 102 for that matter, but in such a case, it becomes extremely difficult to form minute marks.

As can be understood from these points, it is extremely difficult to realize the negative-type micro-hologram technique.

In this regard, the applicant proposes a recording method that uses a void recording (hole recording) technique as disclosed in Patent Document 2 as a new bulk recording method that replaces the micro-hologram technique having the problems as described above.

The void recording method is a method of recording holes (voids) in the bulk layer 102 formed of a recording material such as a photopolymerization-type photopolymer by irradiating laser light onto the bulk layer 102 with relatively-high power. As disclosed in Patent Document 2, refractive indexes of the thus-formed hole portions differ from those of other portions within the bulk layer 102, and optical reflectance at boundary portions thereof is raised. Therefore, the hole portions function as recording marks, and thus information recording that uses hole marks is realized.

Since such a void recording method is not for forming holograms, light irradiation only needs to be performed from one side in the recording. In other words, it is unnecessary to form recording marks by collecting two light fluxes at the same position as in the case of the positive-type micro-hologram technique, and high position control accuracy for collecting two light fluxes at the same position also becomes unnecessary.

Moreover, as compared to the negative-type micro-hologram technique, the initialization processing becomes unnecessary, with the result that the problems regarding the initialization processing described above can be solved.

Patent Document 1: Japanese Patent Application Laid-open No. 2008-135144

Patent Document 2: Japanese Patent Application Laid-open No. 2008-176902

Disclosure of the Invention

Problems to be solved by the Invention

However, the void recording method as described above has the following problems.

Since the void recording method is for forming holes, extremely-high power is required for recording. Specifically, for forming hole marks, a special laser (so-called short-pulse laser) capable of converging extremely-high power in a short time is used.

Alternatively, it is possible to use a commercially-used CW laser (CW: Continuous Wave) that is used in a current optical disc system. In such a case, however, unless laser light is irradiated with power almost at a maximum output and recording is performed with a low recording speed (disc rotation speed), it becomes extremely difficult to stably form hole marks. In other words, there is a problem that a recording sensitivity for forming holes is extremely poor.

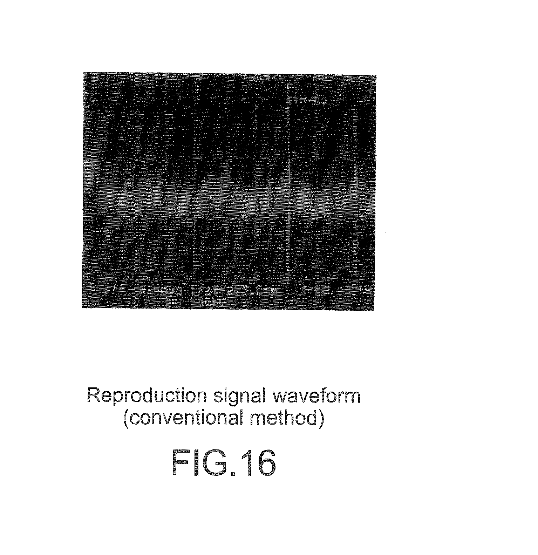

Fig. 16 shows a reproduction signal waveform at a time information recording is performed by the conventional void recording method. It can be seen from the figure that a sufficient SNR (S/N) is not obtained in the conventional void recording method. It should be noted that in Fig. 16, recording mark lengths are uniformly set to 0.17 $\mu$m.

As described above, currently, there is still a problem on the recording sensitivity in the conventional void recording method, and it is important to solve the problem for realizing the technique.

The present invention has been made in view of the problems as described above, and it is an object to additionally enhance realizability of a large-capacity recording medium as a bulk-type recording medium by enabling hole marks to be formed by irradiation of laser light with lower power than in the conventional void recording method.

Means for solving the Problems

To solve the problems above, according to the present invention, an optical recording medium is structured as follows.

Specifically, an optical recording medium according to the present invention includes a recording layer in which a plurality of resin layers are formed and a plurality of boundary surfaces are formed among the resin layers, the boundary surfaces being provided at intervals set to be equal to or smaller than a focal depth of recording light irradiated onto the recording layer.

As described above, the optical recording medium according to the present invention includes the recording layer in which the plurality of boundary surfaces of the resin layers are formed. The intervals of the boundary surfaces are set to be equal to or smaller than the focal depth of recording light. In other words, it can be expressed that the recording layer in this case is practically filled with the boundary surfaces.

Here, the applicant has confirmed from the experimental result that a recording sensitivity of hole marks is enhanced at the boundary surfaces of the resin layers.

Therefore, since the boundary surfaces of the resin layers are thus arranged at fairly-minute intervals that are equal to or smaller than the focal depth of recording light, a high recording sensitivity can be obtained at any position of the recording layer in the depth direction. As a result, with respect to the optical recording medium according to the present invention, hole marks can be formed by irradiating laser light with lower power than in the conventional void recording method.

Effect of the Invention

According to the present invention, an effect equivalent to that of enhancing the hole mark recording sensitivity in the recording layer as the bulk layer as a whole can be obtained, and laser power requisite for forming hole marks can be suppressed to be lower than that in the case where the conventional void recording method is adopted.

As a result, it becomes unnecessary to use a special laser such as a short-pulse laser that has been used in the conventional void recording method, and even if such a special laser is used, a usage output can be reduced.

In addition, in a case where a commercially-used CW laser (CW: Continuous Wave) that is used in a current optical disc system and the like is used in place of the special laser, a recording speed does not need to be sacrificed as in the conventional art, and high-speed recording can be realized.

As described above, according to the present invention, the problems of the conventional void recording method can be solved, and, as a result, realizability of a large-capacity recording medium as a bulk-type recording medium can be additionally enhanced.

Brief Description of Drawings

[Fig. 1] A cross-sectional structural diagram of an optical recording medium (interface-recording-type medium) reasonable for performing interface recording.

[Fig. 2] A diagram showing a relationship between laser power and a distance from an interface at a time hole marks are formed.

[Fig. 3] A diagram showing a reproduction signal waveform in a case where interface recording is performed,

[Fig. 4] A cross-sectional structural diagram of an optical recording medium as an embodiment.

[Fig. 5] A cross-sectional structural diagram of a recording layer included in the optical recording medium as the embodiment.

[Fig. 6] A cross-sectional structural diagram of the recording layer (bulk layer) included in the optical recording medium as the embodiment.

[Figs. 7] Diagrams for explaining a production method for the optical recording medium as the embodiment.

[Fig. 8] A diagram for explaining servo control during recording.

[Fig. 9] A diagram exemplifying a cross-sectional structure in a case where interfaces and a reference surface are not in parallel.

[Fig. 10] A diagram exemplifying a relationship between a hole mark string and the interfaces in a case where the interfaces and the reference surface are not in parallel.

[Fig. 11] A diagram for explaining servo control during reproduction.

[Fig. 12] A diagram showing an internal structure of a recording/reproducing apparatus that performs recording/reproduction with respect to the optical recording medium of the embodiment.

[Fig. 13] A diagram for explaining a bulk recording technique.

[Figs. 14] Diagrams for explaining a micro-hologram technique.

[Figs. 15] Diagrams for explaining a negative-type micro-hologram technique.

[Fig. 16] A diagram showing a reproduction signal waveform in a case where a conventional void recording method is adopted.

Best Mode for Carrying Out the Invention

Hereinafter, an embodiment of the present invention will be described.

It should be noted that the descriptions will be given in the following order.

<1. Reasonable method for interface recording>
<2. Optical recording medium as embodiment>

[2-1. Structure of optical recording medium]
[2-2. Production method for optical recording medium according to embodiment]
[2-3. Servo control]

[2-4. Structure of recording/reproducing apparatus]

<3. Modified example>

<1. Reasonable method for interface recording>

First, prior to describing an embodiment, a reasonable method for interface recording will be described.

As can be understood from the descriptions on Fig. 13 above, the bulk-type optical recording medium realizes multilayer recording by appropriately selecting a position in a bulk layer in a depth direction and performing recording with respect to that position.

For realizing multilayer recording, a position to be a mark string formation layer (information recording layer) is determined in advance in the depth direction of the bulk layer, and recording is performed while setting a focal position at the layer position preset as described above.

As a reasonable method for interface recording, there is a method of using an optical recording medium in which boundary surfaces among resin layers are provided one each at positions to be information recording layers that are preset in the depth direction of the bulk layer as described above and recording hole marks (voids) onto the boundary surfaces.

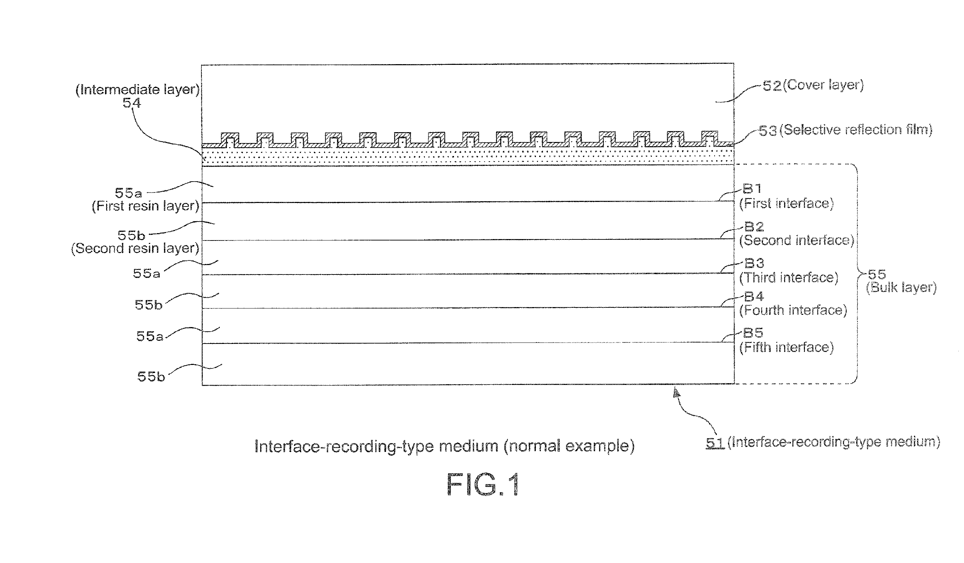

Fig. 1 is a cross-sectional structural diagram of an interface-recording-type medium 51 that is used in the reasonable interface recording method as described above,

First, as a presupposition, the interface-recording-type medium 51 is a disc-like recording medium.

As shown in the figure, a cover layer 52, a selective reflection film 53, an intermediate layer 54, and a bulk layer 55 are formed in the interface-recording-type medium 51 in the stated order from an upper layer side.

Here, the "upper layer side" used in the specification refers to an upper layer side at a time a surface that laser light irradiated for recording or reproduction enters faces upward. In this case, the laser light enters from the cover layer 52 side.

The cover layer 52 is formed of a resin such as polycarbonate and an acrylic resin and has, on a lower surface side thereof as shown in the figure, a concavo-convex cross-sectional shape accompanying formation of guide grooves for guiding recording/reproduction positions.

As the guide grooves, continuous grooves or pit strings are formed. When the guide grooves are formed as grooves, for example, by forming the grooves such that they meander cyclically, absolute positional information (information on radius position and rotational angle) is recorded based on cycle information on the meandering.

The cover layer 2 is formed by injection molding or the like using a stamper on which such guide grooves (concavo-convex shape) are formed.

Further, the selective reflection film 53 is formed below the cover layer 52 in which the guide grooves are formed.

Here, in the bulk recording method, in addition to recording light (first laser light) for recording marks onto the bulk layer as the recording layer, servo light (second laser light) is irradiated for obtaining tracking and focus error signals based on the guide grooves as described above.

At this time, if the servo light reaches the bulk layer, there is a fear that mark recording in the bulk layer is adversely influenced thereby. Therefore, a reflection film having selectivity to reflect servo light and cause recording light to transmit therethrough is necessary.

In the conventional bulk recording method, laser light having different wavelengths are used for the recording light and servo light. Therefore, as the selective reflection film 53, a selective reflection film having wavelength selectivity to reflect light having the same wavelength range as the servo light and cause light having other wavelengths to transmit therethrough is used.

Below the selective reflection film 53, the bulk layer 55 is bonded (laminated) via the intermediate layer 54 formed of an adhesive such as a UV-curable resin.

The bulk layer 55 has a structure in which a plurality of first resin layers 55a and second resin layers 55b are laminated alternately as shown in the figure. Boundary surfaces (simply referred to as "interface") B are formed among the first resin layers 55a and the second resin layers 55b.

Fig. 1 shows a case where the lamination of the first resin layers 55a and the second resin layers 55b is repeated 3 times and a total of 5 interfaces (first interface BI to fifth interface B5) are formed as the interfaces B.

As described above, the reasonable method for interface recording involves providing boundary surfaces among resin layers one each at layer positions to be the preset information recording layers. Therefore, intervals of the interfaces B in the figure match intervals of the layer positions to be the preset information recording layers.

Here, the applicant has confirmed, as a result of carrying out an experiment on the optical recording medium including the interfaces among the resin layers as described above, that a recording sensitivity of hole marks is enhanced at the interfaces.

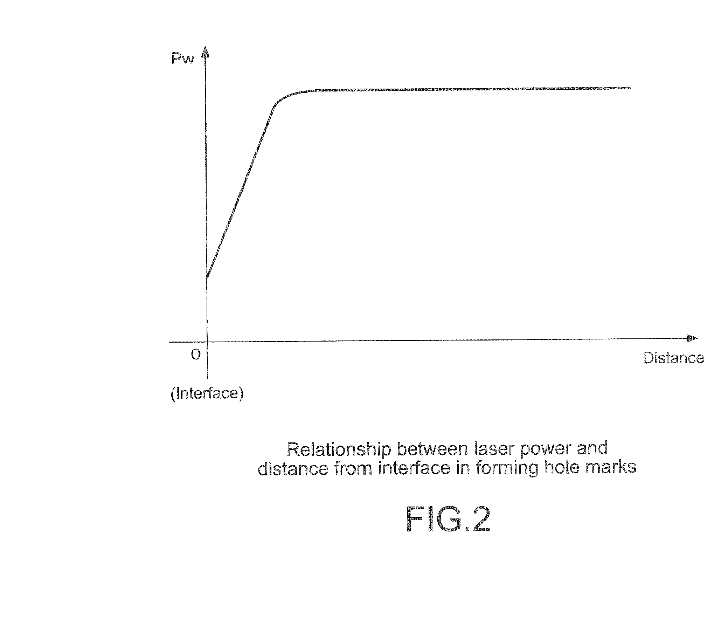

Fig. 2 shows a relationship between laser power and a distance from the interface at a time hole marks are formed.

As shown in the figure, laser power necessary for forming hole marks is lowest at the interface. According to Fig. 2, laser power necessary for forming hole marks gradually increases based on a distance from the interface and becomes constant thereafter in a section between the interface and a point at a certain distance. In other words, in the section between the interface and a point at a certain distance, it is necessary to gradually increase the laser power based on the distance from the interface for forming hole marks, and by setting the laser power to be constant, it becomes possible to form hole marks irrespective of the distance from the interface.

As can be understood from Fig. 2, the recording sensitivity of hole marks becomes most favorable at the interface. Therefore, by recording hole marks onto the interfaces, stable recording can be performed with lower power than in a conventional void recording method that records hole marks inside a bulk layer that does not include an interface.

It should be noted that the reason why the recording sensitivity of hole marks is thus enhanced at the interface between the resin layers is considered to be because light is more apt to be absorbed at the interface than the inside of a resin, It is also considered that hole marks can be formed with ease since a pressure is smaller at the interface than inside a resin.

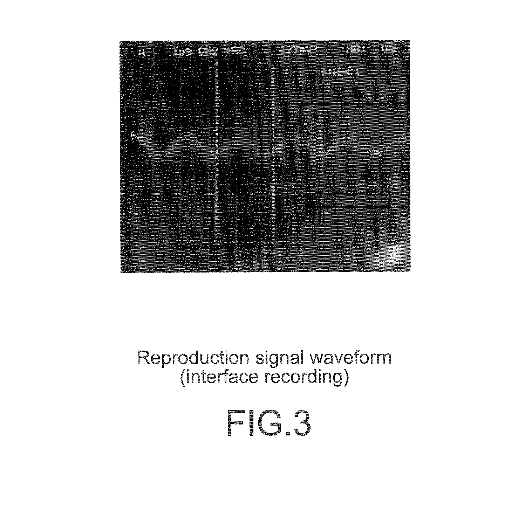

Fig. 3 shows a reproduction signal waveform in a case where hole marks are recorded onto the interfaces. In Fig. 3, the recording mark length is 0. 17 $\mu$m as in Fig. 16.

It can be seen from comparing Figs. 3 and 16 that SNR (S/N) has apparently improved more in the case where void recording is performed by interface recording than in a case where the conventional void recording is performed. The improvement of SNR as described above of course depends on the enhancement of the recording sensitivity at the interfaces.

Here, to obtain a favorable recording sensitivity for the interface-recording-type medium 51 as described above, it is necessary to constantly set the focal position of the laser light on the interface B during recording. In other words, it is necessary to execute focus servo of laser light during recording so that the laser light follows the interfaces B.

It should be noted that in the interface-recording-type medium 51 shown in Fig. 1, the interfaces B are merely boundary surfaces among the resin layers, and a reflection film formed of metal, a dielectric body, or the like is not formed thereon. Therefore, at the time of recording in which marks are not yet formed, some kind of devices are required to enable focus servo to be performed on the interfaces B.

To execute focus servo on the interfaces B, refractive indexes of the first resin layers 55a and second resin layers 55b are made to differ so that the interfaces B among them function as reflectors. Specifically, by using a property of raising a reflectance at an interface between materials having different refractive indexes, reflected light from the interfaces B can be obtained, and thus focus servo control targeting the interfaces B can be executed based on the reflected light.

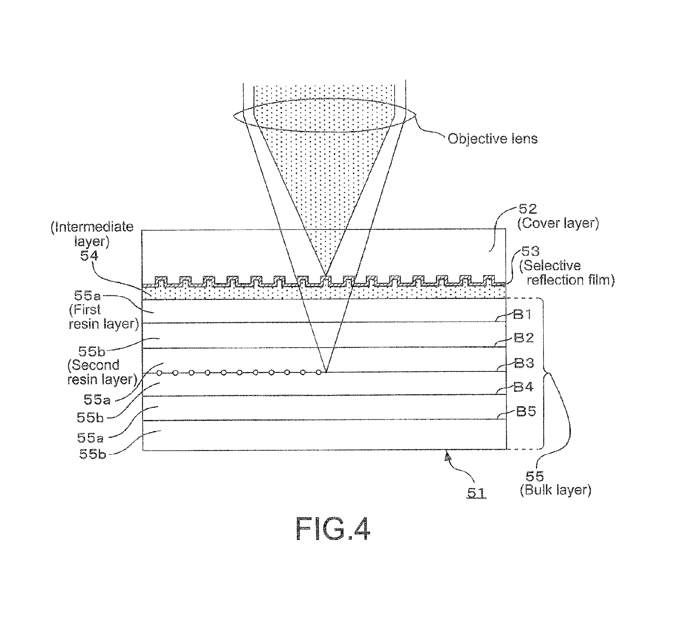

Specific servo control in a case where reflected light from the interfaces B can be obtained as described above will be described below with reference to Fig. 4.

First, as can be understood from the descriptions above, as well as the first laser light for forming hole marks, second laser light as servo light is irradiated onto the interface-recording-type medium 51 as the bulk-type optical recording medium. At this time, the first laser light and the second laser light are not irradiated onto the interface-recording-type medium 51 from different positions but are irradiated via a common objective lens as shown in the figure.

Based on this presupposition, tracking servo will first be described,

During recording, a drive of the objective lens in a tracking direction is performed such that a spot position of the second laser light follows the guide grooves formed on the selective reflection film 53 (cover layer 52) based on reflected light of the second laser light as the servo light.

Here, as described above, the interfaces B are merely boundary surfaces among the resin layers, and guide grooves for guiding the first laser light for forming hole marks are not formed thereon. However, by driving the objective lens such that it follows the guide grooves formed on the selective reflection film 53 based on the reflected light of the second laser light irradiated via the objective lens commonly-used with the first laser light as described above, the position of the first laser light, that is to be irradiated onto the interfaces, in the tracking direction can be set along the guide grooves.

On the other hand, during recording, focus servo control of the first laser light is executed by controlling the position of the objective lens in a focus direction using reflected light of the first laser light since reflected light can be obtained at the interfaces B as described above.

It should be noted that as a reminder, it is necessary to set the focal position of the second laser light during recording to be on the selective reflection film 53 for reading out absolute position information recorded onto the selective reflection film 53.

Therefore, in the optical system in this case, a second laser focus mechanism capable of independently controlling the focal position of the second laser light is additionally provided. For example, the second laser focus mechanism can be realized by an expander that changes a collimation of the second laser light that enters the objective lens.

By thus additionally providing the second laser focus mechanism, focus servo of the second laser light during recording is executed by controlling the second laser focus mechanism based on the reflected light of the second laser light so that the second laser light follows the selective reflection film 53.

Further, during reproduction, since hole mark strings are formed on the interfaces B, both the focus servo and tracking servo of the first laser light can be executed targeting the hole mark strings. Specifically, during reproduction, by controlling the position of the objective lens in the focus direction and the tracking direction based on the reflected light of the first laser light, the spot position of the first laser light follows the hole mark string recorded at the target layer position.

It should be noted that when carrying out an access operation to a reproduction start position during reproduction, it is necessary to read out absolute position information recorded onto the selective reflection film 53. Specifically, after completion of access to the reproduction start position, the position of the objective lens in the tracking direction is controlled based on the reflected light of the first laser light so that the first laser light follows the hole mark string as described above, but until the access operation is completed, the position of the objective lens in the tracking direction needs to trace the guide grooves based on the reflected light of the second laser light for reading out the absolute position information.

Considering this point, control of the objective lens in the tracking direction during reproduction needs to be switched before access completion and after access completion. Specifically, control is executed to follow the guide grooves on the selective reflection film 53 based on the reflected light of the second laser light before access completion, and control is executed to follow the hole mark string formed on the target information recording layer based on the reflected light of the first laser light after access completion.

It should be noted that as a reminder, focus servo does not need to be switched before and after access completion, Focus servo of the first laser light is executed by controlling the position of the objective lens based on the reflected light of the first laser light, and focus servo of the second laser light is executed by controlling the second laser focus mechanism described above based on the reflected light of the second laser light.

Servo control of the first laser light and the second laser light during recording/reproduction is summarized below.

(During recording)

• Focus servo of first laser light is executed by controlling position of objective lens in focus direction so as to follow interface B based on reflected light of first laser light
(Tracking servo of first laser light during recording is executed automatically by position control of objective lens in tracking direction based on reflected light of second laser light)
Focus servo of second laser light is executed by controlling second laser focus mechanism so as to follow selective reflection film 53 based on reflected light of second laser light
Tracking servo of second laser light is executed by controlling position of objective lens in tracking direction so as to follow guide grooves of selective reflection film 53 based on reflected light of second laser light

(During reproduction)

Tracking servo control of objective lens is executed such that spot of second laser light follows guide grooves of selective reflection film 53 based on reflected light of second laser light before access completion and is executed such that spot of first laser light follows hole mark string formed on target information recording layer based on reflected light of first laser light after access completion
• Focus servo is executed by controlling position of objective lens in focus direction based on reflected light of first laser light regarding first laser light and is executed by controlling second laser focus mechanism based on reflected light of second laser light regarding second laser light

As can be understood from the descriptions above, when the method of forming the interfaces B one each at the layer positions preset as positions to be the information recording layers is adopted as the reasonable method for interface recording, focus servo of the first laser light targeting the interfaces B is executed after the refractive indexes of the first resin layers 55a and second resin layers 55b are made to differ so that the interfaces B function as reflectors for obtaining a favorable recording sensitivity.

However, in a case where multilayer recording is assumed as the bulk-type optical recording medium, if the interfaces B are made to function as reflectors as described above, there is a fear that multiple interferences, stray light, and crosstalk will be induced, and recording/reproducing characteristics will thus be prominently impaired.

<2. Optical recording medium as embodiment>

[2-1. Structure of optical recording medium]

In view of the problems that are caused in the case where the reasonable method for interface recording is adopted as described above, this embodiment proposes an optical recording medium as follows as an interface-recording-type optical recording medium.

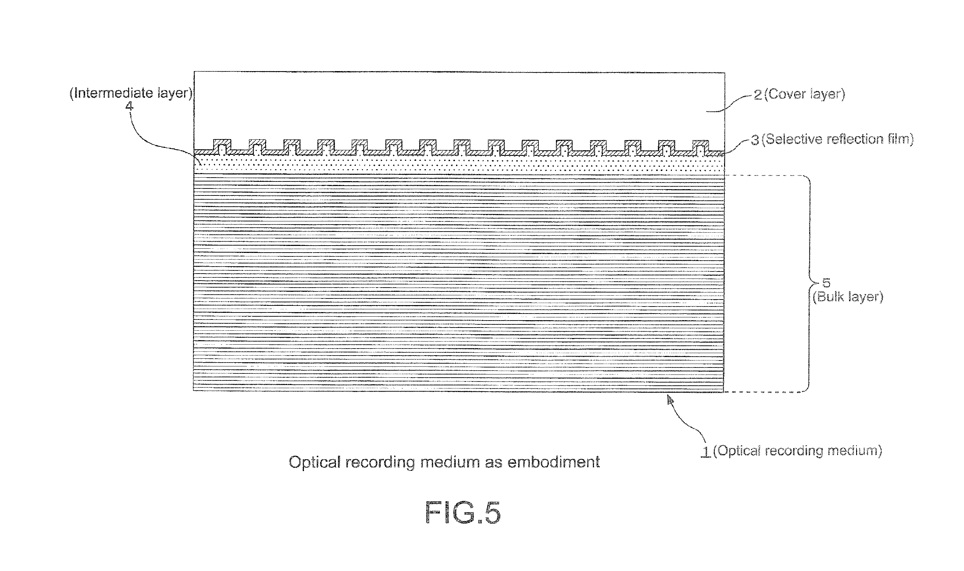

Fig. 5 shows a cross-sectional structural diagram of an optical recording medium 1 as the embodiment.

It should be noted that the optical recording medium 1 is also a disc-like recording medium.

As can be seen from comparing Fig. 5 with Fig. 1, the optical recording medium 1 of this embodiment roughly includes a cover layer 2, a selective reflection film 3, an intermediate layer 4, and a bulk layer 5 in the stated order from the upper layer side.

The cover layer 2 is formed of a resin such as polycarbonate and an acrylic resin and has, on a lower surface side thereof, a concavo-convex cross-sectional shape accompanying formation of guide grooves for guiding recording/reproduction positions similar to the cover layer 52. Also in this case, the guide grooves are formed of continuous grooves or pit strings, and absolute position information is recorded by formation of the pit strings or wobbling of the grooves.

The cover layer 2 is formed by injection molding or the like using a stamper on which such guide grooves (concavo-convex shape) are formed.

Further, the selective reflection film 3 is formed below the cover layer 2 in which the guide grooves are formed.

Also in this case, as the selective reflection film 3, in correspondence with irradiations of first laser light and second laser light having different wavelengths onto the optical recording medium 1, a selective reflection film having wavelength selectivity to reflect light having the same wavelength range as the second laser light and cause light having other wavelengths to transmit therethrough is used.

The intermediate layer 4 is an adhesive such as a UV-curable resin and bonds (laminates) the bulk layer 5 below the selective reflection film 3.

Here, in the case of this embodiment, the bulk layer 5 is structure to have a fairly-minute multilayer structure as shown in the figure.

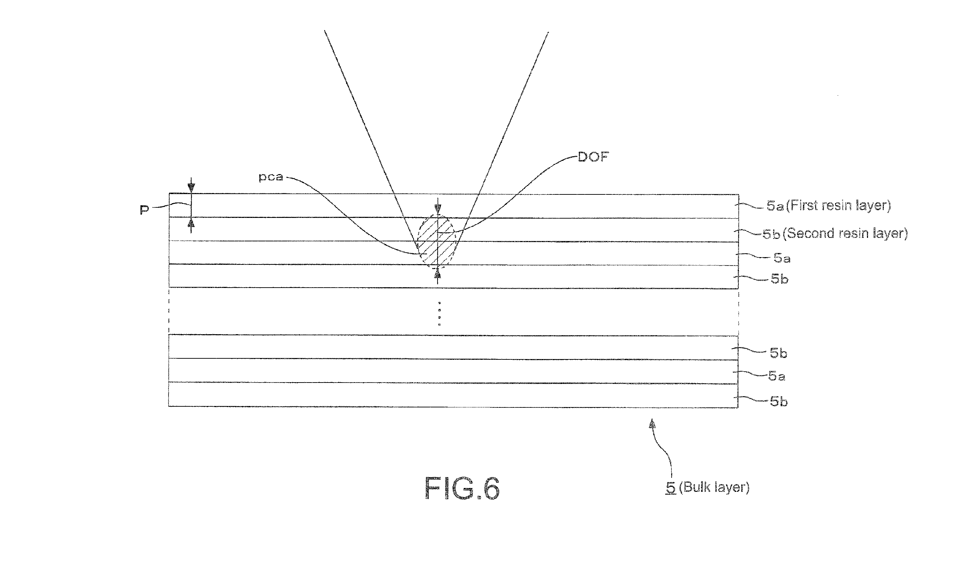

Fig. 6 is a cross-sectional structural diagram of the bulk layer 5 provided as a recording layer in the optical recording medium 1 of this embodiment.

As shown in Fig. 6, the bulk layer 5 of this embodiment also has a structure in which a plurality of first resin layers 5a and second resin layers 5b are laminated alternately, and a plurality of boundary surfaces are formed among the resins.

It should be noted that in this embodiment, as in the case of the reasonable method described above, intervals of the boundary surfaces (i.e., formation pitch p of resin layers) are not the same as the intervals of layer positions preset as the layer positions to be the information recording layers and are set to be more minute intervals.

Specifically, as shown in the figure, when the formation pitches (i.e., thicknesses of resin layers) of the first resin layers 5a and the second resin layers 5b are represented by p and a focal depth of the first laser light irradiated onto the bulk layer 5 for forming hole marks is represented by DOF, the following is established.

$$p \leq DOF$$

Here, when the numerical aperture of the objective lens as an output terminal of the first laser light is represented by NA and a wavelength of the first laser light is represented by $\lambda$, the focal depth DOF is expressed as follow,

$$DOF = \lambda/NA2$$

As such a condition of "DOF = $\lambda$/NA2" is satisfied, the bulk layer 5 in this case is practically filled with the boundary surfaces of resins as can be seen from Fig. 5.

Here, in the vicinity of a focal point of the first laser light, a portion at which power concentrates as indicated by the area pca in the figure is obtained. In the area pca, power is almost constant.

Hole marks are formed within a range including at least the area pca at which power concentrates as described above.

The size of hole marks corresponds to the size of the area pca, but the size of the area pca in the focus direction (depth direction) can be assumed to practically match the focal depth DOF of the first laser light as shown in the figure.

Therefore, considering this point, by setting the intervals of the boundary surfaces to be equal to or smaller than the focal depth DOF as described above, the area pca always includes the boundary surfaces even when every position in the bulk layer 5 in the depth direction is set as the focal position of the first laser light. As a result, a high recording sensitivity can be obtained even when every position within the bulk layer 5 is set as a recording target position.

As described above, according to the optical recording medium of this embodiment, even when every position in the bulk layer 5 in the depth direction is set as the recording position, a high recording sensitivity can be obtained. In other words, it is possible to obtain an effect equivalent to that of enhancing the hole mark recording sensitivity in the recording layer as the bulk layer as a whole.

As a result, the focal position of the first laser light does not need to follow the interfaces B during recording as in the case of the reasonable interface recording method described above.

In addition, since the first laser light does not need to follow the interfaces B during recording (i.e., during mark formation), the boundary surfaces among the first resin layers 5a and the second resin layers 5b do not need to function as reflectors in this embodiment, with the result that the problems of the reasonable method described above on multiple interferences, stray light, crosstalk, and lowering of a light amount at a layer position on the back side of the bulk layer can be solved. In other words, recording/reproducing characteristics can be improved as compared to the case where the reasonable method is adopted.

Further, since hole marks are recorded targeting the boundary surfaces of resins also in the optical recording medium 1 of this embodiment, laser power requisite for forming hole marks can be suppressed to be lower than that in the case where the conventional void recording method is adopted.

As a result, it becomes unnecessary to use a special laser such as a short-pulse laser that has been used in the conventional void recording method, and even if such a special laser is used, a usage output can be reduced.

In addition, in a case where a commercially-used CW laser (CW: Continuous Wave) is used, a recording speed does not need to be sacrificed as in the conventional art, and high-speed recording can be realized.

According to this embodiment, the problems of the conventional void recording method can be solved, and, as a result, realizability of a large-capacity recording medium as a bulk-type recording medium can be additionally enhanced.

[2-2. Production method for optical recording medium according to embodiment]

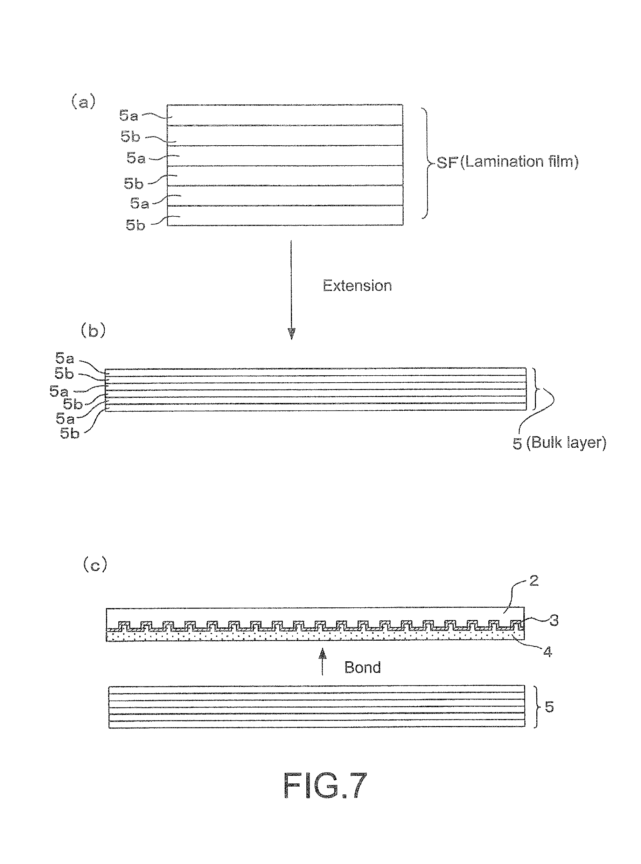

Referring to Figs. 7, an example of a production method for the optical recording medium 1 according to the embodiment will be described.

The point in the production method for the optical recording medium 1 of this embodiment is a generation process of the bulk layer 5. Here, when the numerical aperture NA of the objective lens and the recording wavelength $\lambda$ are respectively set to be NA = 0.85 and $\lambda$ = 405 nm which are equivalent to the current BD (Blu-ray Disc), for example, the focal depth DOF defined by "$\lambda/NA2$" becomes about 555 nm. In other words, in this case, thicknesses of the first resin layers 5a and second resin layers 5b need to be about 0.55 $\mu$m or less.

The production method exemplified in Fig, 7 is particularly favorable for realizing, as the bulk layer 5, a multilayer structure constituted of layers having minute thicknesses.

In Figs. 7, first, a multilayer film SF in which predetermined numbers of first resin layers 5a and second resin layers 5b are laminated alternately is generated by a multilayer film generation process shown in Fig. 7 (a). Here, for convenience of illustrations, the laminated numbers of first resin layers 5a and second resin layers 5b are 3, and only 5 boundary surfaces are formed. However, as can be understood from the descriptions above, the laminated numbers of first resin layers 5a and second resin layers 5b are larger in actuality. Assuming that the thicknesses of the first resin layers 5a and second resin layers 5b are set to 0.5 $\mu$m and the thickness of the bulk layer 9 is set to 250 $\mu$m, the number of resin layers forming the bulk layer 9 is 500.

Here, as can be understood from the descriptions above, in the optical recording medium 1 of this embodiment, it is unnecessary for the boundary surfaces among the first resin layers 5a and the second resin layers 5b to function as reflectors, and thus materials having different refractive indexes do not need to be used for the first resin layers 5a and the second resin layers 5b. In solving the problems on multiple interferences, stray light, and the like described above, resin materials having almost the same refractive index are selected for the first resin layers 5a and the second resin layers 5b.

As the materials for forming the first resin layers 5a and the second resin layers 5b, it is desirable to use a resin material having high transparency with respect to visible light.

In the case of this example, a thermoplastic resin is used for the first resin layers 5a and the second resin layers 5b. Specifically, as such a thermoplastic resin, an aromatic polyester such as polyethylene terephthalate, polyethylene2,6-naphthalate, and polypolybutylene terephthalate, and polyolefin such as polyethylene and polypropylene can be used. Alternatively, polyvinyl such as polystyrene, polyamide such as nylon 66 (poly(hexamethylendiamine-co-adipate), and aromatic polycarbonate such as bisphenol A polycarbonate can be used.

In addition, a resin, a fluorine resin, and the like that include a homopolymer such as polysulfone or a copolymer thereof as a main component can also be used.

Alternatively, a mixture of the resins exemplified above can be used.

At this time, considering the fact that there is a fear that the boundary surfaces may blur by an extension process to be described later, it is favorable to use different resin materials for the first resin layers 5a and the second resin layers 5b.

Further, as the first resin layers 5a and the second resin layers 5b, it is desirable to use materials having at least one of elasticity and heat conductivity differing from each other. Specifically, by differentiating at least one of elasticity and heat conductivity of the two resins forming the boundary surface, an enhancement of a hole mark recording sensitivity at the boundary surface can be expected. Specifically, if one of the resins forming the boundary surface is soft and the other is hard, for example, it is expected that formation of hole marks becomes easier that much. Further, also for the heat conductivity, if heat is apt to be transmitted to one of the resins forming the boundary surface and heat is less apt to be transmitted to the other resin, it is expected that formation of hole marks becomes easier that much.

Here, as a combination of resin materials having different elasticity or heat conductivity, there is, for example, a combination of aromatic polycarbonate and polystyrene.

[Table 1] below shows an example of elasticity (longitudinal elastic modulus) and heat conductivity of the resin layers in a case where a multilayer film (bulk layer 5) is generated using aromatic polycarbonate as the first resin layers 5a and polystyrene as the second resin layers 5b.

[Table 1]

| | Heat conductivity (W/mK) | Tension intensity (kgf/cm^2) | Compression intensity (kgf/cm^2) | Bending intensity (kgf/cm^2) |
|---|---|---|---|---|
| Aromatic polycarbonate | 0.19 | 550~700 | 844 | 949 |
| Polystyrene | 0.108 | 350~840 | 809~1120 | 562~984 |

Referring back to Fig. 7, descriptions will be given.

After generating the multilayer film SF by the multilayer film lamination process shown in Fig. 7(a), the multilayer film SF is extended by the extension process shown in Fig. 7(b) so that the first resin layers 5a and the second resin layers 5b reach a desired thickness ("p" described above in this case)

At this time, since a thermoplastic resin is used for the first resin layers 5a and the second resin layers 5b in this example as described above, in the extension process, the multilayer film SF is extended while being heated to a predetermined temperature (glass-transition temperature or melting-point temperature).

It should be noted that the multilayer film generation process and the extension process respectively shown in Figs. 7(a) and 7(b) can be carried out by a multilayer film production process that uses a coextruded feed block as disclosed in the following Reference Example 1, for example. Reference Example 1 ... Japanese Patent Application Laid-open No. 2006-159537

The bulk layer 5 of this embodiment can be generated by the extension process.

The thus-generated bulk layer 5 is laminated as a recording layer of the optical recording medium by a recording layer lamination process shown in Fig. 7(c).

Here, although descriptions using the figure will be omitted, in the production method in this case, processes for obtaining a layer structure of the cover layer 2, the selective reflection film 3, and the intermediate layer 4 shown in Fig. 7(c) are carried out in addition to the processes shown in Figs. 7(a) and 7 (b) .

Specifically, first, as a generation process of the cover layer 2, the cover layer 2 in which guide grooves are formed on one surface is generated by injection molding using the stamper as described above. Next, as a reflection film deposition process, the selective reflection film 3 is deposited on the surface of the cover layer 2 on which the guide grooves are formed by, for example, sputtering or vapor deposition. Then, after the selective reflection film 3 is deposited on the cover layer 2 as described above, the intermediate layer 4 formed of an adhesive such as a UV-curable resin is laminated on the selective reflection film 3. At this time, the lamination of the intermediate layer 4 can be carried out by, for example, spin coat of the UV-curable resin. Alternatively, a so-called HPSA (sheet-type UV-curable PSA: Pressure Sensitive Adhesive) can be used as the UV-curable resin, and in such a case, the HPSA having a predetermined thickness is mounted on the selective reflection film 3.

In the recording layer lamination process shown in Fig. 7(c), the bulk layer 5 is mounted on the adhesive as the intermediate layer 4 laminated on the selective reflection film 3 by the process as described above and irradiated with ultraviolet rays. Accordingly, the bulk layer 5 as the recording layer is bonded to the intermediate layer 4 on the lower surface side, with the result that the optical recording medium 1 having the structure shown in Fig. 5 is produced.

It should be noted that although the case where a thermoplastic resin is used as the first resin layers 5a and the second resin layers 5b has been exemplified in the descriptions above, a heat-curable resin can be used instead. Examples of the heat-curable resin include an epoxy resin, a phenol resin, and a silicon resin.

When the heat-curable resin is used for the first resin layers 5a and the second resin layers 5b, the extended multilayer film SF is subjected to heat processing so that the extended multilayer film SF is cured by heat.

Further, as the generation process of the bulk layer 5, other than the extension process as described above, a method of alternately laminating, by spin coat, predetermined thicknesses of the first resin layers 5a and the second resin layers 5b formed of, for example, a UV-curable resin may also be adopted. In this case, since the thicknesses of the first resin layers 5a and the second resin layers 5b need to be extremely small, it is desirable for a viscosity of the UV-curable resin to be about several cps to several ten cps.

[2-3. Servo control]

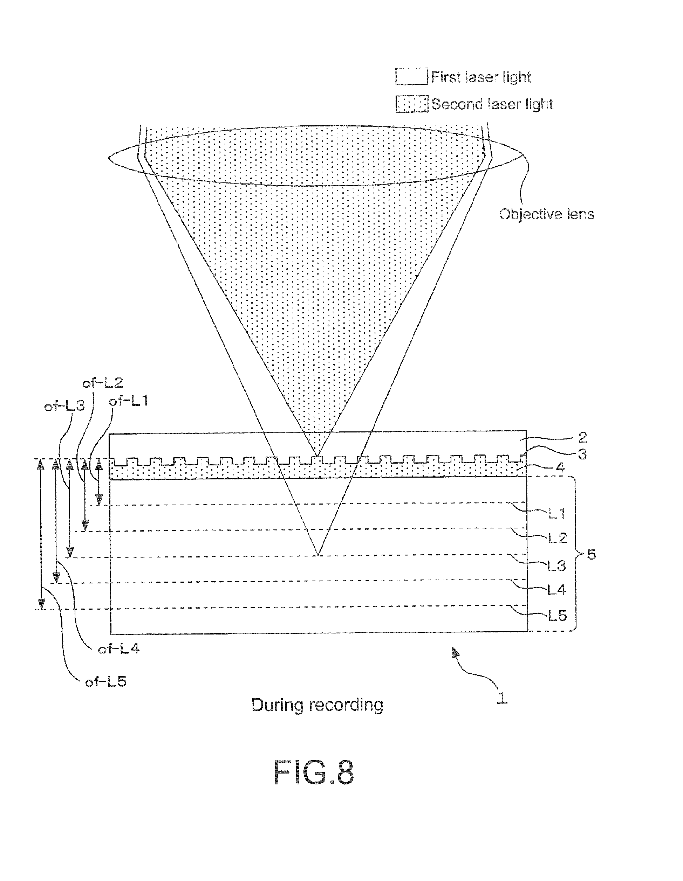

Subsequently, servo control executed when performing recording/reproduction using the optical recording medium 1 of this embodiment will be described with reference to Figs. 8 to 11.

First, referring to Fig. 8, servo control during recording will be described.

In Fig. 8, the first laser light for forming hole marks and the second laser light as servo light that has a different waveleng th from the first laser light are irradiated onto the optical recording medium 1 of this example as described above. Also in this case, the first laser light and the second laser light are irradiated via a common objective lens.

Here, since guide grooves and a reflection film are not formed in the bulk layer of the optical recording medium 1 of this embodiment as in the conventional bulk-type optical recording medium shown in Fig. 13, positions for forming hole marks in the bulk layer in the depth direction are set in advance.

The figure shows an example of a case where, as the layer positions for forming marks (mark formation layers: also referred to as information recording layers) in the bulk layer 5 as described above, a total of 5 mark formation layers (information recording layers) L, that is, first to fifth mark formation layers L1 to L5 are set.

As shown in the figure, the layer position of the first mark formation layer L1 is a position that is apart from the selective reflection film 3 on which the guide grooves are formed only by an amount corresponding to a first offset of-L1 in the focus direction (depth direction). Further, the layer positions of the second mark formation layer L2, third mark formation layer L3, fourth mark formation layer L4, and fifth mark formation layer L5 are set at positions apart from the selective reflection film 3 only by amounts respectively corresponding to a second offset of-L2, third offset of-L3, fourth offset of-L4, and fifth offset of-L5.

It should be noted that as a reminder, the distances among the information recording layers L are considerably larger than the formation pitch p of the first resin layers 5a and the second resin layers 5b.

Further, the set number of information recording layers L exemplified herein is merely for convenience of illustrations, and the actual set number of information recording layers L in the bulk layer 5 is set to be, for example, about several ten (e.g., about 20 layers) for realizing a large recording capacity.

Here, since the boundary surfaces in the bulk layer 5 do not function as reflectors in the optical recording medium 1 of this example, during recording in which marks are not yet recorded, focus servo targeting the layer positions in the bulk layer 5 is not executed based on the reflected light of the first laser light.

As will be described below, this embodiment adopts a servo method different from that of the case of the reasonable method for interface recording described above.

Specifically, in the case of this embodiment, a second laser focus mechanism that independently controls the focal position of the second laser light is not provided, and control of the focal position of the second laser light is constantly executed by control of the objective lens.

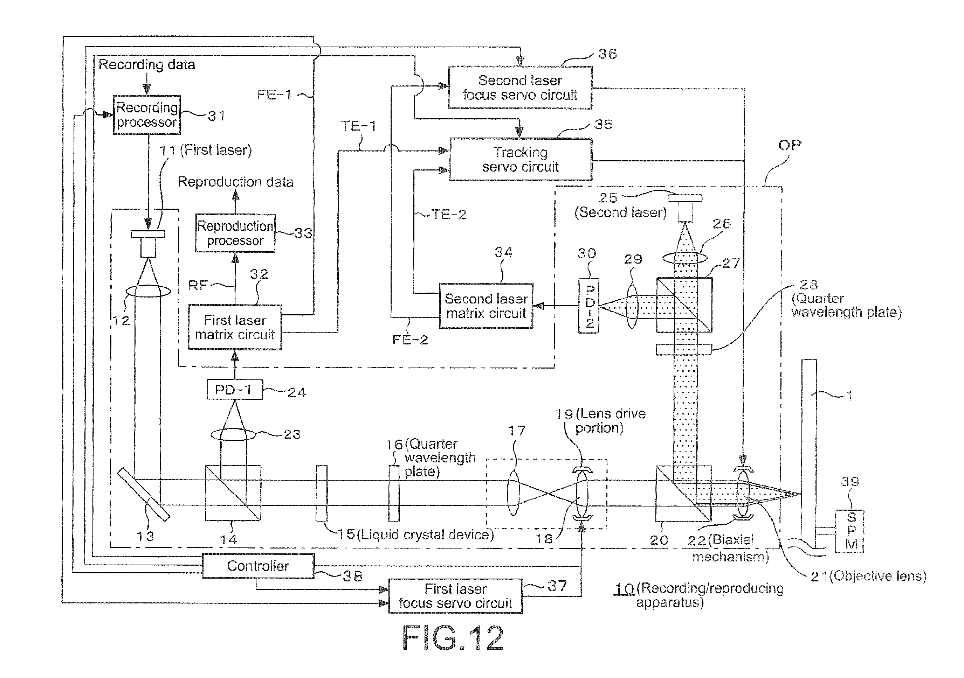

In the case of this embodiment, a first laser focus mechanism (lens 18 and lens drive portion 19 in Fig. 12 to be described later) that independently controls the focal position of the first laser light is provided instead.

Based on this presupposition, servo control during recording will be described.

First, also in this case, since absolute position information is to be read out by the second laser light during recording, the focal position of the second laser light during recording is set on the selective reflection film 3 so that the spot position follows the guide grooves formed on the selective reflection film 3. Specifically, by controlling the position of the objective lens in the focus/tracking directions based on the reflected light of the second laser light, focus and tracking positions of the second laser light as described above are controlled.

Moreover, regarding the first laser light, when recording hole marks onto a desired information recording layer L out of the preset information recording layers L, the first laser focus mechanism is controlled to change the focal position of the first laser light only by an amount corresponding to an offset of corresponding to the selected information recording layer L. The figure shows an example where the third information recording layer L3 is selected as a recording target information recording layer L and the focal position of the first laser light is changed only by an amount corresponding to the third offset of-L3 with respect to the selective reflection film 3.

It should be noted that as a reminder, position control of the objective lens in the tracking direction is executed so as to follow the guide grooves based on the reflected light of the second laser light as described above. Therefore, also in this case, the spot position of the first laser light in the tracking direction is automatically controlled to be set along the guide grooves.

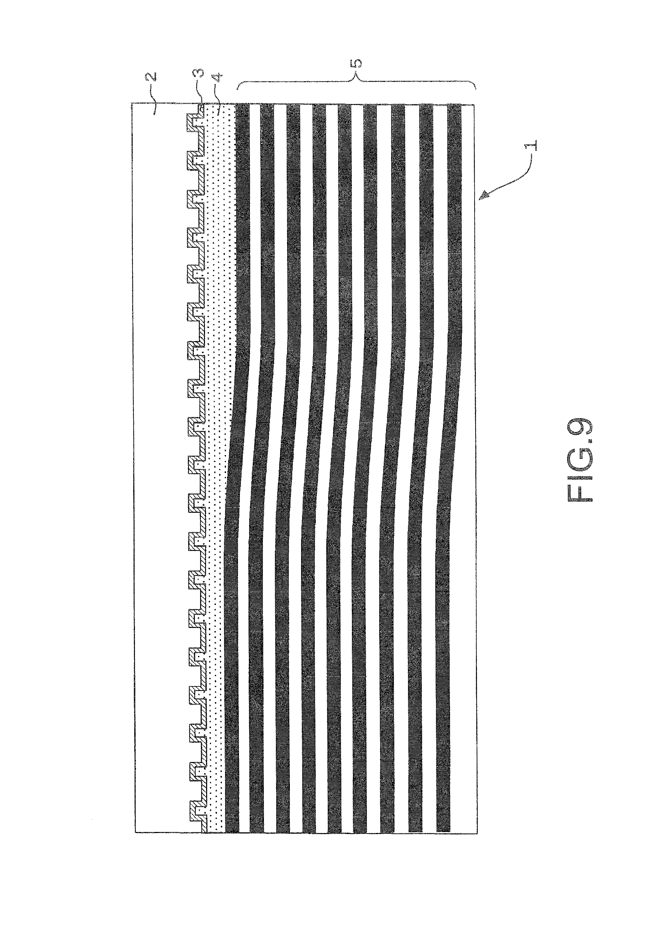

Incidentally, considering the actual production method for the optical recording medium 1, as the layer structure of the bulk layer 5, there is a possibility that a parallelism with respect to the reference surface (formation surface of selective reflection film 3) will be lost as shown in Fig. 9. In other words, there is a high possibility that a parallelism of the interfaces with respect to the reference surface will be lost due to unevenness in the thicknesses of the first resin layers 5a and the second resin layers 5b.

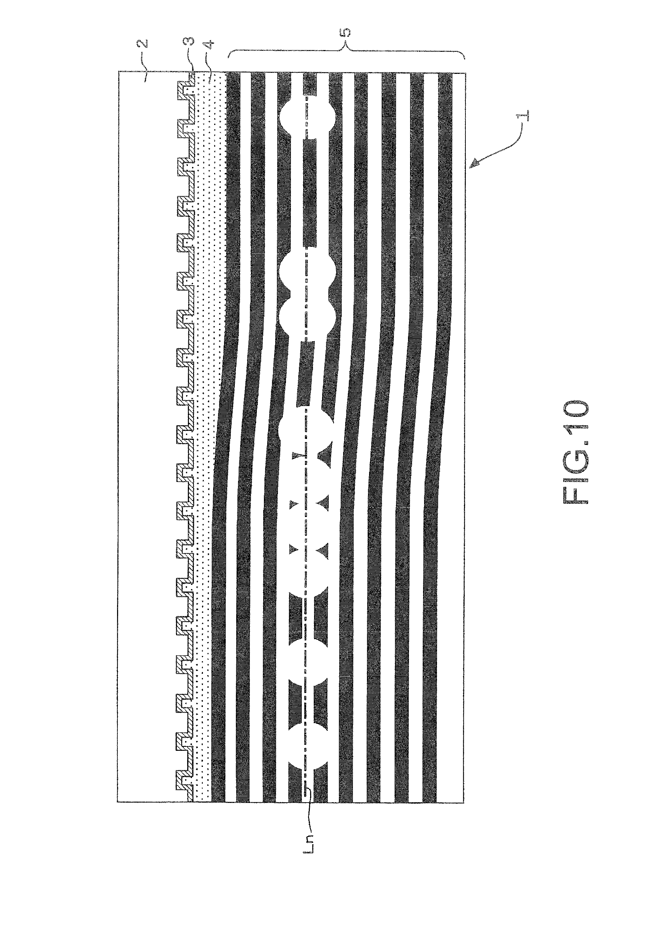

When recording hole marks by servo control during recording in a case where the interfaces of the bulk layer 5 and the reference surface are not in a parallel relationship as described above, a relationship between the formed hole mark string and the interfaces is as shown in Fig. 10.

As described above, during recording, in a state where the position of the objective lens in the focus direction is controlled such that the focal position of the second laser light is set on the selective reflection film 3 (reference surface) based on the reflected light of the second laser light, the recording position is selected while the focal position of the first laser light is offset a predetermined amount from the reference surface. As a result, when the interfaces and the reference surface are not in a parallel relationship, the hole mark string is formed nonparallel to the interfaces as shown in Fig. 10.

However, as described above, in the case of this embodiment, since the intervals of the interfaces are equal to or smaller than the focal depth of the first laser light, hole marks can be formed with a high sensitivity even when the hole mark string (spot position of first laser light) and the interfaces are nonparallel as described above due to an influence of the servo control during recording.

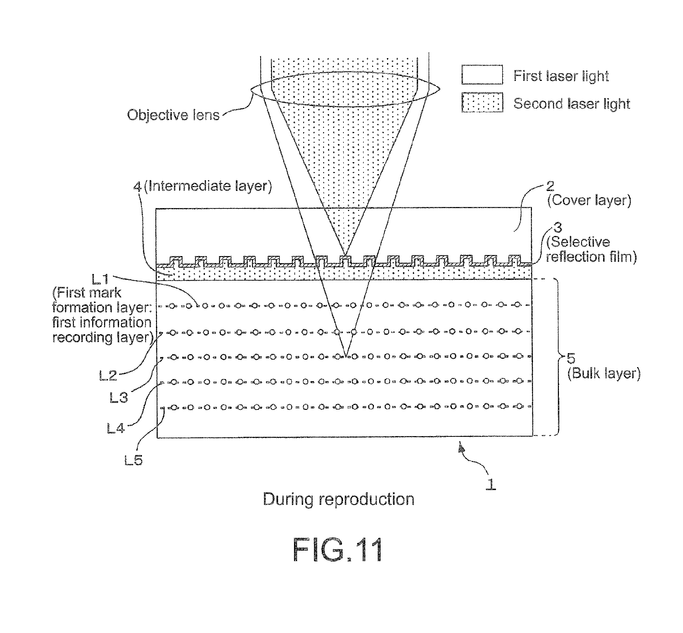

Subsequently, referring to Fig. 11, servo control during reproduction will be described.

It should be noted that Fig. 11 shows an example of a state where hole marks are recorded onto all of the first to fifth mark formation layers L1 to L5 in the optical recording medium 1 at the time of reproduction.

When reproducing the optical recording medium 1 onto which hole marks are already recorded, focus servo control of the first laser light can be executed targeting the already-recorded hole mark string. Therefore, the focus servo control of the first laser light during reproduction is executed such that, by controlling the first laser focus mechanism based on the reflected light of the first laser light, the focal position follows the hole mark string (information recording layer L) as a reproduction target.

Further, to enable absolute position information to be read out by the second laser light regarding focus servo control of the second laser light, the position of the objective lens in the focus direction is also controlled so as to follow the selective reflection film 3 based on the reflected light of the second laser light.

Furthermore, tracking servo during reproduction (control of objective lens in tracking direction) is also switched before and after access completion.

Specifically, position control of the objective lens in the tracking direction is executed so as to follow the guide grooves on the selective reflection film 3 based on the reflected light of the second laser light before access completion and is executed so as to follow a hole mark string as a reproduction target based on the reflected light of the first laser light after access completion.

Summarizing the descriptions above, servo control of the first laser light and the second laser light during recording/reproduction in this case is executed as follows.

(During recording)

• Focus servo of first laser light is executed by varying focal position of first laser light only by amount corresponding to offset of corresponding to recording target information recording layer L by first laser focus mechanism while position control of objective lens in focus direction targeting selective reflection film 3 is executed based on reflected light of second laser light

(Tracking servo of first laser light during recording is executed automatically by position control of objective lens in tracking direction based on reflected light of second laser light)

Focus servo of second laser light is executed by controlling position of objective lens in focus direction so as to follow selective reflection film 3 based on reflected light of second laser light

• Tracking servo of second laser light is executed by controlling position of objective lens in tracking direction so as to follow guide grooves of selective reflection film 3 based on reflected light of second laser light

(During reproduction)

• Tracking servo control of objective lens is executed such that spot of second laser light follows guide grooves of selective reflection film 3 based on reflected light of second laser light before access completion and is executed such that spot of first laser light follows reproduction target hole mark string based on reflected light of first laser light after access completion

■ Focus servo is executed by controlling first laser focus mechanism to follow target hole mark string based on reflected light of first laser light regarding first laser light and is executed by controlling position of objective lens in focus direction so as to follow selective reflection film 3 based on reflected light of second laser light regarding second laser light

[2-4. Structure of recording/reproducing apparatus]

Fig. 12 shows an internal structure of a recording/reproducing apparatus 10 that performs recording/reproduction with respect to the optical recording medium 1 shown in Fig. 5.

First, the optical recording medium 1 loaded into the recording/reproducing apparatus 10 is rotationally driven by a spindle motor (SPM) 39 shown in the figure.

In the recording/reproducing apparatus 10, an optical pickup OP for irradiating the first laser light and the second laser light onto the rotationally-driven optical recording medium 1 is provided.

Inside the optical pickup OP, a first laser 11 as a light source of the first laser light for recording information by hole marks and reproducing information recorded by hole marks and a second laser 25 as a light source of the second laser light as servo light are provided.

Here, as described above, the first laser light and the second laser light have different wavelengths. In the case of this example, the wavelength of the first laser light is about 405 nm (so-called bluish-purple laser light), and the wavelength of the second laser light is about 650 nm (so-called red laser light).

Further, inside the optical pickup OP, an objective lens 21 as an output terminal for the first laser light and the second laser light with respect to the optical recording medium 1 is provided.

Furthermore, a first photodetector (PD-1 in figure) 24 for receiving reflected light of the first laser light from the optical recording medium 1 and a second photodetector (PD-2 in figure) 30 for receiving reflected light of the second laser light from the optical recording medium 1 are provided.

Inside the optical pickup OP, an optical system for guiding, as well as guide the first laser light emitted from the first laser 11 to the objective lens 21, the reflected light of the first laser light from the optical recording medium 1, that has entered the objective lens 21, to the first photodetector 24 is formed.

Specifically, the first laser light emitted from the first laser 11 is made parallel light via a collimator lens 12 and enters a polarization beam splitter 14 after optical axes thereof are bent 90 degrees by a mirror 13. The polarization beam splitter 14 is structured to cause the first laser light that has been emitted from the first laser 11 and entered via the mirror 13 to transmit therethrough.

The first laser light that has been transmitted through the polarization beam splitter 14 is transmitted through a liquid crystal device 15 and a quarter wavelength plate 16.

Here, the liquid crystal device 15 is provided for correcting a so-called off-axis aberration such as a coma aberration and an astigmatism.

The first laser light that has been transmitted through the quarter wavelength plate 16 enters an expander constituted of lenses 17 and 18. In the expander, the lens 17 closer to the first laser 11 as the light source is a fixed lens, and the lens 18 farther from the first laser 11 is a movable lens. By driving the lens 18 in a direction parallel to the optical axis of the first laser light by a lens drive portion 19 shown in the figure, independent focus control is executed for the first laser light.

As will be described later, the expander (lens drive portion 19) offsets the focal position of the first laser light in response to an instruction from a controller 38 during recording and executes focus control of the first laser light based on an output signal from a first laser focus servo circuit 37 during reproduction.

The first laser light enters a dichroic mirror 20 via the expander. The dichroic mirror 20 is structured to cause light having the same wavelength range as the first laser light to transmit therethrough and reflect light having other wavelengths. Therefore, the first laser light that has entered as described above is transmitted through the dichroic mirror 20.

The first laser light that has been transmitted through the dichroic mirror 20 is irradiated onto the optical recording medium 1 via the objective lens 21.

With respect to the objective lens 21, a biaxial mechanism 22 that holds the objective lens 21 in a state where it can be displaced in the focus direction (approaching/parting direction with respect to optical recording medium 1) and the tracking direction (direction orthogonal to focus direction: radial direction of optical recording medium 1) is provided. As drive currents are applied to a focus coil and tracking coil from a second laser focus servo circuit 36 and tracking servo circuit 35, the biaxial mechanism 22 displaces the objective lens 21 in the focus direction and the tracking direction.

By irradiating the first laser light onto the optical recording medium 1 as described above during reproduction, reflected light of the first laser light can be obtained from the optical recording medium 1 (hole mark string recorded onto reproduction target information recording layer L in bulk layer 5). The thus-obtained reflected light of the first laser light is guided to the dichroic mirror 20 via the objective lens 21 to be transmitted therethrough.

The reflected light of the first laser light that has been transmitted through the dichroic mirror 20 enters, after passing through the lenses 18 and 17 constituting the expander described above, the polarization beam splitter 14 via the quarter wavelength plate 16 and the liquid crystal device 15.

Here, by an operation of the quarter wavelength plate 16 and a reflection operation by the optical recording medium 1, a polarization direction of the reflected light of the first laser light that enters the polarization beam splitter 14 as described above (return light) differs 90 degrees from that of the first laser light that has entered the polarization beam splitter 14 from the first laser 11 side (emission light). As a result, the reflected light of the first laser light that has entered as described above is reflected by the polarization beam splitter 14.

The reflected light of the first laser light that has been reflected by the polarization beam splitter 14 as described above is guided to a collective lens 23 side in the figure.

The collective lens 23 collects the thus-guided reflected light of the first laser light on a detection surface of the first photodetector 24.

Further, inside the optical pickup OP, in addition to the structure of the optical system regarding the first laser light described above, an optical system for guiding, as well as guide the second laser light emitted from the second laser 25 to the objective lens 21, the reflected light of the second laser light from the optical recording medium 1, that has entered the objective lens 21, to the second photodetector 30 is formed.

As shown in the figure, the second laser light emitted from the second laser 25 is made parallel light via a collimator lens 26 and enters a polarization beam splitter 27 after that. The polarization beam splitter 27 is structured to cause the second laser light that has entered via the second laser 25 and the collimator lens 26 (emission light) to transmit therethrough.

The second laser light that has been transmitted through the polarization beam splitter 27 enters the dichroic mirror 20 via a quarter wavelength plate 28.

As described above, the dichroic mirror 20 is structured to cause light having the same wavelength range as the first laser light to transmit therethrough and reflect light having other wavelengths. Therefore, the second laser light is reflected by the dichroic mirror 20 and irradiated onto the optical recording medium 1 via the objective lens 21 as shown in the figure.

Further, the reflected light of the second laser light obtained by the irradiation of the second laser light onto the optical recording medium 1 as described above (reflected light from selective reflection film 3) is reflected by the dichroic mirror 20 via the objective lens 21 and enters the polarization beam splitter 27 after passing through the quarter wavelength plate 28.

Similar to the first laser light, by an operation of the quarter wavelength plate 28 and a reflection operation of the optical recording medium 1, a polarization direction of the reflected light of the second laser light (return light) that has thus entered from the optical recording medium 1 side differs 90 degrees from that of the emission light. Therefore, the reflected light of the second laser light as the return light is reflected by the polarization beam splitter 27.

The reflected light of the second laser light reflected by the polarization beam splitter 27 as described above is collected on the detection surface of the second photodetector 30 via a collective lens 29.

Although descriptions using the figure will be omitted herein, in actuality, a slide drive portion that slideably drives the entire optical pickup OP in the tracking direction is provided in the recording/reproducing apparatus 10, and by the slide drive portion driving the optical pickup OP, the irradiation position of the laser light can be displaced within a wide range.

Moreover, also provided in the recording/reproducing apparatus 10 together with the optical pickup OP and the spindle motor 39 described above are a recording processor 31, a first laser matrix circuit 32, a reproduction processor 33, a second laser matrix circuit 34, the tracking servo circuit 35, the second laser focus servo circuit 36, the first laser focus servo circuit 37, and the controller 38.

First, data to be recorded onto the optical recording medium 1 (recording data) is input to the recording processor 31. By adding an error correction code to or performing a predetermined recording modulation encoding on the input recording data, for example, the recording processor 31 obtains a recording modulation data string as a binary data string of "0" and "1" that is actually recorded onto the optical recording medium 1.

The recording processor 31 drives light emission of the first laser 11 based on the thus-generated recording modulation data string in response to an instruction from the controller 38.

The first laser matrix circuit 32 includes a current-voltage conversion circuit and a matrix operation/amplifier circuit in accordance with output currents from a plurality of light receiving devices as the first photodetector 24 and generates signals requisite for matrix operation processing.

Specifically, a high-frequency signal (hereinafter, referred to as reproduction signal RF) that corresponds to a reproduction signal obtained by reproducing the recording modulation data string described above, a focus error signal FE-1 for focus servo control, and a tracking error signal TE-1 for tracking servo control are generated.

The reproduction signal RF generated by the first laser matrix circuit 32 is supplied to the reproduction processor 33.

Further, the focus error signal FE-1 is supplied to the first laser focus servo circuit 37, and the tracking error signal TE-1 is supplied to the tracking servo circuit 35.

The reproduction processor 33 carries out reproduction processing for restoring the recording data described above, such as binary processing and decoding/error correction processing of recording modulation codes, on the reproduction signal RF and obtains reproduction data by reproducing the recording data.

Further, the first laser focus servo circuit 37 executes focus servo control of the first laser light by generating a focus servo signal based on the focus error signal FE-1 and controlling drive of the lens drive portion 19 based on the focus servo signal.

As can be understood from the descriptions above, focus servo control of the first laser light by the drive of the lens drive portion 19 based on the reflected light of the first laser light is executed during reproduction.

The first laser focus servo circuit 37 controls the drive of the lens drive portion 19 such that an interlayer jump operation among the information recording layers L (hole mark strings) formed in the optical recording medium 1 and draw-in of focus servo with respect to a required information recording layer L are carried out in response to instructions from the controller 38 during reproduction.

Regarding the second laser light, the second laser matrix circuit 34 includes a current-voltage conversion circuit and a matrix operation/amplifier circuit in accordance with output currents from a plurality of light receiving devices as the second photodetector 30 and generates signals requisite for matrix operation processing.

Specifically, the second laser matrix circuit 34 generates a focus error signal FE-2 and a tracking error signal TE-2 used for focus/tracking servo control.

The focus error signal FE-2 is supplied to the second laser focus servo circuit 36, and the tracking error signal TE-2 is supplied to the tracking servo circuit 35 as shown in the figure.

The second laser focus servo circuit 36 executes focus servo control of the objective lens 21 by generating a focus servo signal based on the focus error signal FE-2 and driving the focus coil of the biaxial mechanism 22 based on the focus servo signal. As described above, focus servo control of the objective lens 21 is executed based on the reflected light of the second laser light during both recording and reproduction.

The second laser focus servo circuit 36 drives the focus coil such that draw-in of focus servo with respect to the selective reflection film 3 (guide groove formation surface) formed in the optical recording medium 1 is carried out in response to an instruction from the controller 38.

In response to an instruction from the controller 38, the tracking servo circuit 35 drives the tracking coil of the biaxial mechanism 22 based on either the tracking error signal TE-1 from the first laser matrix circuit 32 or the tracking error signal TE-2 from the second laser matrix circuit 34.

As described above, tracking servo control of the objective lens 21 is executed based on the reflected light of the second laser light during recording. Moreover, during reproduction, the tracking servo control is executed based on the reflected light of the second laser light before access completion and executed based on the reflected light of the first laser light after access completion.

The tracking servo circuit 35 generates a tracking servo signal based on the tracking error signal TE-2 in response to an instruction from the controller 38 during recording and drives the tracking coil of the biaxial mechanism 22 based on the tracking servo signal. Further, during reproduction, the tracking servo circuit 35 generates a tracking servo signal based on the tracking error signal TE-2 in response to an instruction from the controller 38 and drives the tracking coil of the biaxial mechanism 22 based on the tracking servo signal before access completion, and generates a tracking servo signal based on the tracking error signal TE-1 in response to an instruction from the controller 38 and drives the tracking coil of the biaxial mechanism 22 based on the tracking servo signal after access completion.

The tracking servo circuit 35 also carries out a draw-in operation of tracking servo and a track jump operation in response to instructions from the controller 38.

The controller 38 is constituted of a microcomputer equipped with, for example, a CPU (Central Processing Circuit) and a memory (storage apparatus) such as a ROM (Read Only Memory) and controls the entire recording/reproducing apparatus 10 by executing control and processing according to programs stored in the ROM, for example. Specifically, during recording, the controller 38 controls the focal position of the first laser light (selection of recording position in depth direction) based on the value of the offset of preset in accordance with the layer positions as described with reference to Fig. 8. Specifically, the controller 38 selects the recording position in the depth direction by driving the lens drive portion 19 based on the value of the offset of preset in accordance with the layer position as the recording target. Here, as described above, tracking servo control during recording is to be executed based on the reflected light of the second laser light. Therefore, during recording, the controller 38 instructs the tracking servo circuit 35 to execute tracking servo control based on the tracking error signal TE-2.

Also during recording, the controller 38 instructs the second laser focus servo circuit 38 to execute focus servo control (focus servo control of objective lens 21) based on the focus error signal FE-2.

On the other hand, during reproduction, the controller 38 instructs the first laser focus servo circuit 37 to focus the first laser light on the information recording layer L onto which data to be reproduced is recorded (hole mark string formation position In other words, regarding the first laser light, focus servo control targeting the information recording layer L is executed.

Further, during reproduction, the controller 38 instructs the tracking servo circuit 35 to switch the tracking servo control before and after access completion. Specifically, tracking servo control based on the tracking error signal TE-2 is executed before access completion, and tracking servo control based on the tracking error signal TE-1 is executed after access completion.

Further, during reproduction, the controller 38 instructs the second laser focus servo circuit 36 to execute focus servo control based on the focus error signal FE-2 (focus servo control of objective lens 21).

It should be noted that although descriptions using the figure are omitted, absolute position information recorded onto the selective reflection film 3 (guide groove formation surface) is read out based on the reflected light of the second laser light. Therefore, in actuality, the second laser matrix circuit 34 generates a reproduction signal for a signals recorded onto the guide groove formation surface (e.g., sum signal as RF signal is generated when information is recorded by pit strings, and push-pull signal is generated when information is recorded by wobbling groves). Moreover, a position information detection portion that detects absolute position information based on such a reproduction signal on a recording signal is provided.

<3. Modified example>

The embodiment of the present invention has been described heretofore, but the present invention is not limited to the specific examples described above.

For example, the structure of the optical recording medium exemplified above is a mere example and may be changed as appropriate by, for example, adding a layer as necessary, based on an actual embodiment.

Moreover, the materials for forming the bulk layer (recording layer) (resin materials) in the example are not limited, and optimal materials only need to be used as appropriate according to the actual embodiment.

Further, the production method for an optical recording medium is also not limited to that exemplified above.

The case where guide grooves are formed on the optical recording medium has been exemplified as the structure that enables a recording (and reproduction) position to be guided in the descriptions above, but a structure in which marks are recorded onto, for example, a phase change film may be adopted instead of the guide grooves. In other words, focus/tracking error signals, position information, and the like are obtained based on thus-recorded position guide mark strings.

Furthermore, although the case where a disc-like recording medium is adopted as the optical recording medium of the present invention has been exemplified in the descriptions above, the shape may be other shapes such as a rectangle.

Description of Symbols

| | |
|---|---|
| 1 | optical recording medium |
| 2 | cover layer |
| 3 | selective reflection film |
| 4 | intermediate layer |
| 5 | bulk layer |
| 5a | first resin layer |
| 5b | second resin layer |
| L1-L5 | first to fifth mark formation layer (mark formation layer) |
| 10 | recording/reproducing apparatus |
| 11 | first laser |
| 12, 26 | collimator lens |
| 13 | mirror |
| 14, 27 | polarization beam splitter |
| 15 | liquid crystal device |
| 16, 28 | quarter wavelength plate |
| 17, 18 | lens |
| 19 | lens drive portion |
| 20 | dichroic mirror |
| 21 | objective lens |
| 22 | biaxial mechanism |

| 23, 29 | collective lens |
| 24 | first photodetector |
| 25 | second laser |
| 31 | recording processor |
| 32 | first laser matrix circuit |
| 33 | reproduction processor |
| 34 | second laser matrix circuit |
| 35 | tracking servo circuit |
| 36 | second laser focus servo circuit |
| 37 | first laser focus servo circuit |
| 38 | controller |
| 39 | spindle motor |

**Claims**

1.  An optical recording medium, comprising
    a recording layer in which a plurality of resin layers are formed and a plurality of boundary surfaces are formed among the resin layers, the boundary surfaces being provided at intervals set to be equal to or smaller than a focal depth of recording light irradiated onto the recording layer.

2.  The optical recording medium according to claim 1,
    wherein refractive indexes of two resin layers forming the boundary surface are almost the same.

3.  The optical recording medium according to claim 1,
    wherein elastic moduli of two resin layers forming the boundary surface differ.

4.  The optical recording medium according to claim 1,
    wherein heat conductivities of two resin layers forming the boundary surface differ.

5.  A production method for an optical recording medium, comprising:

    a multilayer film generation step of generating a multilayer film in which a first resin material and a second resin material are alternately laminated a plurality of times;
    an extended multilayer film generation step of generating an extended multilayer film by extending the multilayer film; and
    a recording layer lamination step of laminating the extended multilayer film as a recording layer of the optical recording medium.

6.  The production method for an optical recording medium according to claim 5, further comprising:

    a cover layer generation step of generating a cover layer in which a guide groove is formed on one surface; and
    a reflection film deposition step of depositing a reflection film on the surface of the cover layer on which the guide groove is formed, the cover layer being generated by the cover layer generation step,
    wherein the recording layer lamination step includes laminating the extended multilayer film by bonding the extended multilayer film to the surface of the cover layer on the side on which the reflection film is deposited.

**Amended claims under Art. 19.1 PCT**

1. An optical recording medium, comprising
a recording layer in which a plurality of resin layers are formed and a plurality of boundary surfaces are formed among the resin layers, the boundary surfaces being provided at intervals set to be equal to or smaller than a focal depth of recording light irradiated onto the recording layer.

2. The optical recording medium according to claim 1,
wherein refractive indexes of two resin layers forming the boundary surface are almost the same.

**3.** The optical recording medium according to claim 1,
wherein elastic moduli of two resin layers forming the boundary surface differ.

**4.** The optical recording medium according to claim 1,
wherein heat conductivities of two resin layers forming the boundary surface differ.

**5.** A production method for an optical recording medium, comprising:

a multilayer film generation step of generating a multilayer film in which a first resin material and a second resin material are alternately laminated a plurality of times;
an extended multilayer film generation step of generating an extended multilayer film by extending the multilayer film so that a thickness of each layer becomes equal to or smaller than a focal depth of recording light; and
a recording layer lamination step of laminating the extended multilayer film as a recording layer of the optical recording medium.

**6.** The production method for an optical recording medium according to claim 5, further comprising:

a cover layer generation step of generating a cover layer in which a guide groove is formed on one surface; and
a reflection film deposition step of depositing a reflection film on the surface of the cover layer on which the guide groove is formed, the cover layer being generated by the cover layer generation step,
wherein the recording layer lamination step includes laminating the extended multilayer film by bonding the extended multilayer film to the surface of the cover layer on the side on which the reflection film is deposited.

EP 2 490 220 A1

(Intermediate layer)
54

52(Cover layer)

53(Selective reflection film)

55a
(First resin layer)

B1
(First interface)

55b
(Second resin layer)

B2
(Second interface)

55a

B3
(Third interface)

55
(Bulk layer)

55b

B4
(Fourth interface)

55a

B5
(Fifth interface)

55b

Interface-recording-type medium (normal example)

51 (Interface-recording-type medium)

FIG.1

Relationship between laser power and
distance from interface in forming hole marks

FIG.2

Reproduction signal waveform
(interface recording)

# FIG.3

Objective lens

(Intermediate layer) 54

52 (Cover layer)

53 (Selective reflection film)

55a (First resin layer)

55b (Second resin layer)

55a

55b

55a

55b

B1

B2

B3

B4

B5

55 (Bulk layer)

51

FIG.4

Optical recording medium as embodiment

FIG.5

FIG.6

(a)

5a
5b
5a
5b
5a
5b

SF (Lamination film)

Extension

(b)

5a
5b
5a
5b
5a
5b

5 (Bulk layer)

(c)

2
3
4

Bond

5

FIG.7

First laser light

Second laser light

Objective lens

of-L2
of-L3
of-L1

2
3
4

L1
L2
L3
L4
L5
5

of-L4

of-L5

During recording

1

FIG.8

FIG.9

FIG.10

During reproduction

FIG.11

FIG.12

FIG.13

Laser light

101 (Cover layer)

102 (Bulk layer)

(a)

Light
flux A

Light
flux B

Positive-type micro-hologram

(b)

Light
flux A

Negative-type micro-hologram

FIG.14

(a)

C

101

102

D

(b)

101

102

FIG.15

Reproduction signal waveform
(conventional method)

FIG.16

<div align="center">

**INTERNATIONAL SEARCH REPORT**

</div>

| | International application No. |
| --- | --- |
| | PCT/JP2010/005939 |

A. CLASSIFICATION OF SUBJECT MATTER
*G11B7/24*(2006.01)i, *G11B7/007*(2006.01)i, *G11B7/244*(2006.01)i, *G11B7/26* (2006.01)i

According to International Patent Classification (IPC) or to both national classification and IPC

B. FIELDS SEARCHED

Minimum documentation searched (classification system followed by classification symbols)
G11B7/24, G11B7/007, G11B7/244, G11B7/26

Documentation searched other than minimum documentation to the extent that such documents are included in the fields searched
    Jitsuyo Shinan Koho       1922-1996   Jitsuyo Shinan Toroku Koho   1996-2010
    Kokai Jitsuyo Shinan Koho   1971-2010   Toroku Jitsuyo Shinan Koho   1994-2010

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| A | JP 2008-71441 A (Ricoh Co., Ltd.), 27 March 2008 (27.03.2008), entire text; all drawings (Family: none) | 1-6 |
| A | JP 2004-30864 A (Ricoh Co., Ltd.), 29 January 2004 (29.01.2004), entire text; all drawings (Family: none) | 1-6 |
| A | JP 9-138972 A (Taiyo Yuden Co., Ltd.), 27 May 1997 (27.05.1997), entire text; all drawings (Family: none) | 1-6 |

☒   Further documents are listed in the continuation of Box C.      ☐   See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
|    29 November, 2010 (29.11.10) |    07 December, 2010 (07.12.10) |

| Name and mailing address of the ISA/ | Authorized officer |
| --- | --- |
|    Japanese Patent Office | |
| Facsimile No. | Telephone No. |

Form PCT/ISA/210 (second sheet) (July 2009)

**INTERNATIONAL SEARCH REPORT**

International application No.

PCT/JP2010/005939

C (Continuation).   DOCUMENTS CONSIDERED TO BE RELEVANT

| Category* | Citation of document, with indication, where appropriate, of the relevant passages | Relevant to claim No. |
|---|---|---|
| A | JP 3-224792 A  (TDK Corp.),<br>03 October 1991 (03.10.1991),<br>entire text; all drawings<br>& US 5161150 A          & EP 385341 A2<br>& DE 69033550 D | 1-6 |
| A | JP 2-3123 A  (Toray Industries, Inc.),<br>08 January 1990 (08.01.1990),<br>entire text; all drawings<br>(Family: none) | 1-6 |
| A | WO 2004/068483 A1  (Sony Corp.),<br>12 August 2004 (12.08.2004),<br>entire text; all drawings<br>& US 2006/0083151 A1     & KR 10-2005-0103478 A<br>& CN 1742331 A | 1-6 |

Form PCT/ISA/210 (continuation of second sheet) (July 2009)

## INTERNATIONAL SEARCH REPORT

| International application No. |
| --- |
| PCT/JP2010/005939 |

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:
    The invention of claims 1-4 relates to "an optical recording medium comprising
a recording layer having a plurality of resin layers formed to form a plurality
of boundary faces between said resin layers, wherein the spacings between the
individuals of said boundary faces are made not larger than the focal depth
of a recording light to be emitted on said recording layer."  (continued to
extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**         ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (July 2009)

| INTERNATIONAL SEARCH REPORT | International application No. |
|---|---|
| | PCT/JP2010/005939 |

Continuation of Box No.III of continuation of first sheet(2)

    The invention of claims 5 and 6 relates to "a process for manufacturing an optical recording medium, comprising: a laminate film forming step of forming a laminate film, in which a first resin material and a second resin material are alternately laminated a plurality of times; a stretched laminate film forming step of forming a stretched laminate film by stretching said laminate film; and a recording layer laminating step of laminating said stretched laminate films as a recording layer of the optical recording medium."

    These inventions are not considered so relative as to form a single general inventive concept, since it cannot be said that those inventions have one or more of the same or corresponding special technical features.

Form PCT/ISA/210 (extra sheet) (July 2009)

**EP 2 490 220 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2008135144 A
- JP 2008176902 A
- JP 2006159537 A